# EUROPÄISCHE PATENTSCHRIFT

(11) **EP 3 363 098 B1**
(45) Veröffentlichungstag und Bekanntmachung des Hinweises auf die Patenterteilung: **06.12.2023**
(21) Anmeldenummer: 16779124.3
(22) Anmeldetag: 11.10.2016
(51) Int. Cl.: H02K 1/08, H02K 1/14, H02K 3/28, H02K 11/01, H02K 11/33

(54) **ELEKTRISCHER ANTRIEB**
ELECTRIC DRIVE
DISPOSITIF D'ENTRAÎNEMENT ÉLECTRIQUE

(30) Priorität: 13.10.2015 DE 102015219865
(43) Veröffentlichungstag der Anmeldung: 22.08.2018
(73) Patentinhaber: Lenze Drives GmbH, 32699 Extertal (DE)
(72) Erfinder: WETTLAUFER, Jan, 97084 Würzburg (DE); BORCHERDING, Holger, 31840 Hessisch Oldendorf (DE)
(74) Vertreter: Patentanwälte Ruff, Wilhelm, Beier, Dauster & Partner mbB
(86) Internationale Anmeldenummer: PCT/EP2016/074376
(87) Internationale Veröffentlichungsnummer: WO 2017/064079

(56) Entgegenhaltungen:
- EP-A1- 1 840 910
- WO-A1-2014/089613
- WO-A1-2015/134855
- DE-A1-102008 022 369
- US-A1- 2014 191 624

## Beschreibung

Die Erfindung betrifft einen elektrischen Antrieb.

Die US 2014/0191624 A1 und die WO 2014/089613 A1 zeigen jeweils einen elektrischen Antrieb mit einem Rotor und einem Stator in Zahnspulentechnik, wobei der Stator eine Anzahl von Einzelzahnmodulen aufweist. Ein jeweiliges Einzelzahnmodul weist eine Statorwicklung und eine Steuereinrichtung auf, die dazu ausgebildet ist, ein Ansteuersignal für die Statorwicklung zu erzeugen.

Die WO 2015/134855 A1 zeigt einen elektrischen Antrieb mit einem Rotor und einem segmentierten Stator.

Der Erfindung liegt die Aufgabe zugrunde, einen elektrischen Antrieb zur Verfügung zu stellen, der eine möglichst hohe Betriebssicherheit gegenüber Umwelteinflüssen aufweist.

Die Erfindung löst diese Aufgabe durch einen elektrischen Antrieb nach Anspruch 1.

Der elektrische Antrieb weist einen Rotor auf.

Der elektrische Antrieb weist weiter einen Stator in Zahnspulentechnik auf. Hinsichtlich der Zahnspulentechnik sei auch auf die einschlägige Fachliteratur verwiesen. Der Stator weist eine Anzahl, beispielsweise eine Anzahl zwischen 3 und 36, von Einzelzahnmodulen auf.

Ein jeweiliges Einzelzahnmodul weist herkömmlich eine Statorwicklung auf, die um einen zugehörigen Zahn gewickelt ist.

Weiter weist das Einzelzahnmodul eine Steuereinrichtung auf, beispielsweise aufweisend einen Mikrocontroller oder ein FPGA, die dazu ausgebildet ist, ein Ansteuersignal, insbesondere ein pulsweitenmoduliertes Ansteuersignal, beispielsweise in Form eines Ansteuerstroms oder einer Ansteuerspannung, für die Statorwicklung zu erzeugen.

Weiter weist das Einzelzahnmodul eine Abschirmeinrichtung auf, die die Statorwicklung und die Steuereinrichtung umgibt und hermetisch gegen die Umgebung abdichtet.

Eine jeweilige Steuereinrichtung kann ein elektrisches Sicherungselement aufweisen, um beispielsweise im Fehlerfall des Einzelzahnmoduls einen Zwischenkreiskurzschluss zu verhindern.

Eine jeweilige Steuereinrichtung kann ein Leistungshalbleitermodul und/oder einen elektrischen Energiespeicher, beispielsweise in Form eines Kondensators, aufweisen.

Eine jeweilige Steuereinrichtung kann eine Einrichtung zur Erfassung der Rotorlage aufweisen, so dass beispielsweise eine rotorlageabhängige Erzeugung des Steuersignals möglich ist.

Eine jeweilige Steuereinrichtung kann einen Energieversorgungsanschluss aufweisen, mittels dem das Einzelzahnmodul an eine zentrale Energieversorgung, beispielsweise in Form eines DC-Zwischenkreises, angeschlossen werden kann.

Der elektrische Antrieb kann eine übergeordnete Steuerung aufweisen, die in Datenverbindung mit den Steuereinrichtungen der jeweiligen Einzelzahnmodule steht.

Die Abschirmeinrichtung weist ein Gehäuse, insbesondere aus Stahlblech, auf bzw. ist ein solches, wobei das Gehäuse die Statorwicklung und die Steuereinrichtung vollständig umgibt.

Die Abschirmeinrichtung ist zusätzlich aus Vergussmasse gebildet, die weichmagnetische Partikel enthält, wobei die Vergussmasse die Statorwicklung und die Steuereinrichtung vollständig umgibt.

Der Rotor kann an seinem Umfang mit Markierungen zur Kodierung der Rotorlage versehen sein.

Der Rotor kann als Permanentmagnetrotor oder Reluktanzrotor ausgeführt sein.

Die Erfindung stellt einen hochintegrierten Antrieb aufgebaut aus hermetisch abgeriegelten und einzeln abgesicherten Einzelzahnmodulen zur Verfügung.

Der Antrieb ist vorteilhaft als multiphasiger Antrieb aus n Einzelzahnmodulen aufgebaut, um den Verlust an Drehmoment beim Ausfall eines Einzelzahnmoduls möglichst gering zu halten.

Die Wicklung des elektromechanischen Wandlers ist vorteilhaft als Einschichtwicklung ausgeführt, um bei Wärmeentwicklung infolge eines Wicklungskurzschlusses oder ähnlichem eine Beschädigung der benachbarten Wicklung auszuschließen.

Jedes Einzelzahnmodul kann mit einem integrierten Sicherungselement (z.B. Schmelz- oder Halbleitersicherung) versehen sein, welches verhindert, dass im Fehlerfall der (gemeinsame) Zwischenkreis kurzgeschlossen wird.

Die Abschirmeinrichtung als hermetische Abriegelung ist so ausgeführt, dass sie selbst bei einer Explosion des Leistungshalbleitermoduls oder eines Wicklungsbrandes (z.B. infolge eines Kurzschlusses) nicht zerstört wird.

Ein Elektronikmodul (beispielsweise Mikrocontroller oder FPGA sowie zugehörige Peripherie) ist vorteilhaft in das Leistungshalbleitermodul integriert oder direkt an diesem angeordnet.

Der Rotor des elektromechanischen Energiewandlers ist vorteilhaft als Permanentmagnet- oder Reluktanzrotor ausgeführt.

Alle Verbindungen außerhalb des Einzelzahnmoduls können redundant vorhanden sein.

Eingänge der übergeordneten Steuerung und Regelung sowie die Datenverbindungen zwischen den Einzelzahnmodulen sind vorteilhaft potenzialgetrennt ausgeführt.

Die hermetische Abriegelung kann derart ausgeführt sein, dass durch sie eine elektromagnetische Schirmung der eingeschlossenen Elektronik sichergestellt wird. Sie wirkt dadurch als EMV Schirmung zwischen den eingeschlossenen Komponenten und der Umgebung.

Die Einzelzahnmodule sind mit einer schwer entflammbaren und elektrisch nicht leitfähigen Masse vergossen (z.B. Gießharz). Der Verguss kann undurchlässig für Flüssigkeiten und Gase ausgeführt sein. Der Verguss ist zusätzlich mit weichmagnetischen Partikeln, wie z.B. Magnetit, gefüllt. Er ist jedoch weiterhin elektrisch nicht leitfähig.

Der Rotor kann an seinem Umfang mit Markierungen (optisch oder magnetisch) versehen sein, aus denen die Einrichtungen zur Erfassung der Rotorlage den Drehwinkel des Rotors bestimmen können.

Folgende Funktionen können beispielsweise ganz oder teilweise mittels der Steuereinrichtung realisiert sein: Ansteuerung der Leistungshalbleiter (Gate Treiber), Strommessung, PWM, Temperaturmessung, Kommunikation, Schutzfunktionen (wenn die Absicherung gegen Überstrom integriert ist, kann das separate Sicherungselement entfallen), Erfassung der Rotorlage (in mindestens einem Einzelzahnmodul), Regelung der Maschine (wenn das Einzelzahnmodul einen Master bildet), Notregelung der Maschine (beim Ausfall aller Kommunikation kann jedes Einzelzahnmodul autark arbeiten).

Die Erfindung wird nachfolgend unter Bezugnahme auf die Zeichnungen detailliert beschrieben. Hierbei zeigen schematisch:
- Fig. 1: ein erfindungsgemäßes Einzelzahnmodul gemäß einer ersten Ausführungsform,
- Fig. 2: ein erfindungsgemäßes Einzelzahnmodul gemäß einer weiteren Ausführungsform,
- Fig. 3: eine Topologie einer logischen Verschaltung der Einzelzahnmodule mit einer übergeordneten Steuereinheit gemäß einer ersten Ausführungsform,
- Fig. 4: eine Topologie einer logischen Verschaltung der Einzelzahnmodule mit einer übergeordneten Steuereinheit gemäß einer weiteren Ausführungsform und
- Fig. 5: schematisch eine Mehrzahl von Einzelzahnmodulen, die parallel an einen Spannungszwischenkreis angeschlossen sind.

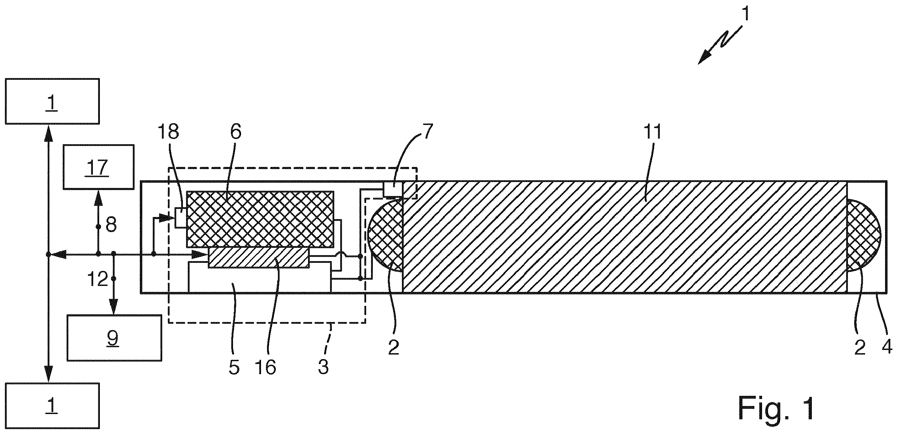

Fig. 1 zeigt exemplarisch ein einzelnes Einzelzahnmodul 1 einer Mehrzahl von Einzelzahnmodulen, die Teil eines nicht näher dargestellten elektrischen Antriebs sind. Der elektrische Antrieb weist weiter einen nicht dargestellten Rotor und einen Stator in Zahnspulentechnik und einen nicht weiter dargestellten Rotor auf, wobei die Einzelzahnmodule 1 Teil des Stators sind.

Der Rotor kann beispielsweise als Permanentmagnetrotor oder Reluktanzrotor ausgeführt sein.

Ein jeweiliges Einzelzahnmodul 1 weist eine Statorwicklung 2 auf, die um einen zugehörigen Zahn 11 aus Elektroblech gewickelt ist. Vorliegend sind aus Gründen der einfacheren Darstellung schematisch lediglich Wickelköpfe der Statorwicklung 2 gezeigt.

Das Einzelzahnmodul 1 weist eine Steuereinrichtung 3 auf, die dazu ausgebildet ist, ein Ansteuersignal für die Statorwicklung 2 zu erzeugen. Die Steuereinrichtung 3 weist hierzu ein elektrisches Sicherungselement 18, ein Leistungshalbleitermodul 5, einen elektrischen Energiespeicher 6, eine optionale Einrichtung 7 zur Erfassung der Rotorlage und ein Elektronikmodul 16 auf. Das Elektronikmodul 16 kann beispielsweise einen Mikrocontroller oder ein FPGA und zugehörige Peripheriebauelemente aufweisen, wie Widerstände, Kondensatoren, Spulen, A/D-Wandler usw.

Die Steuereinrichtung 3 weist einen Energieversorgungsanschluss 8 zum Anschließen an eine Energieversorgung bzw. einen DC-Zwischenkreis 17 auf.

Weiter ist ein Datenübertragungsanschluss 12 vorgesehen, mittels dem die Steuereinrichtung 3 mit einer übergeordneten Steuerung 9 datenverbunden ist.

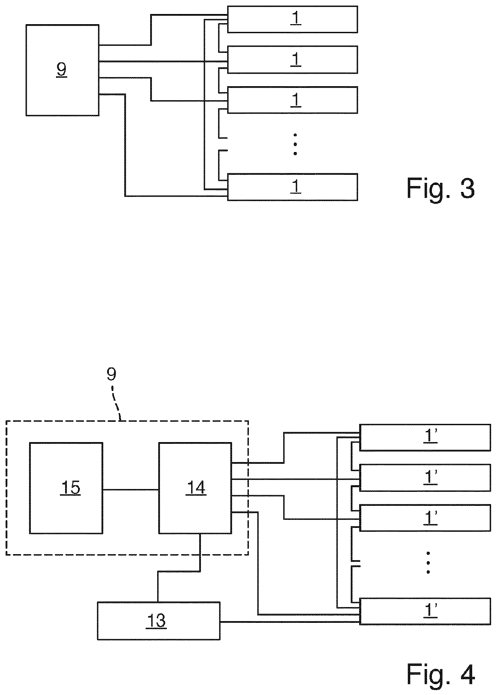

Fig. 3 zeigt beispielhaft eine mögliche Topologie einer logischen Verschaltung der Einzelzahnmodule 1 mit der übergeordneten Steuerung 9. Eines der Einzelzahnmodule 1 ist als Master festgelegt und übernimmt die Regelung des elektrischen Antriebs und überwacht die Kommunikation. Sollte das Master-Einzelzahnmodul ausfallen, so wird eines der bisherigen Slave-Einzelzahnmodule als neues Master-Einzelzahnmodul festgelegt und übernimmt die Regelung des Antriebs. Beim Ausfall der übergeordneten Steuerung 9 oder der Verbindung zu ihr startet der Master ein Notprogramm, in welchem er die Module auf einen vorgegebenen Betriebspunkt hin regelt.

Wenn die Einzelzahnmodule 1 keine Einrichtung 7 zur Erfassung der Rotorlage aufweisen, kann alternativ wie in Fig. 4 gezeigt eine zentrale Einrichtung 13 zur Erfassung der Rotorlage vorgesehen sein, die die Rotorlage über die jeweiligen Datenübertragungsanschlüsse 12 zu den Einzelzahnmodulen überträgt, wobei die Einrichtung 13 auch in eines der Einzelzahnmodule integriert sein kann. Beim Ausfall der Rotorlageerfassung kann der Antrieb auch geberlos geregelt weiterbetrieben werden. Sollte es die Anwendung zulassen, kann auf ein System zur Erfassung der Rotorlage auch komplett verzichtet werden.

Weiter wird die Steuerung 9 in Fig. 4 zusätzlich um einen übergeordneten Regelungsblock 14 und um einen Steuerungsblock 15 erweitert, wobei der Steuerungsblock 15 auch in der Steuerung 9 von Fig. 3 vorgesehen sein kann.

Das Einzelzahnmodul 1 in Fig. 1 weist eine Abschirmeinrichtung 4 in Form eines Stahlblech-Gehäuses auf, das die Statorwicklung 2 und die Steuereinrichtung 3 umgibt und von der Umgebung abschirmt.

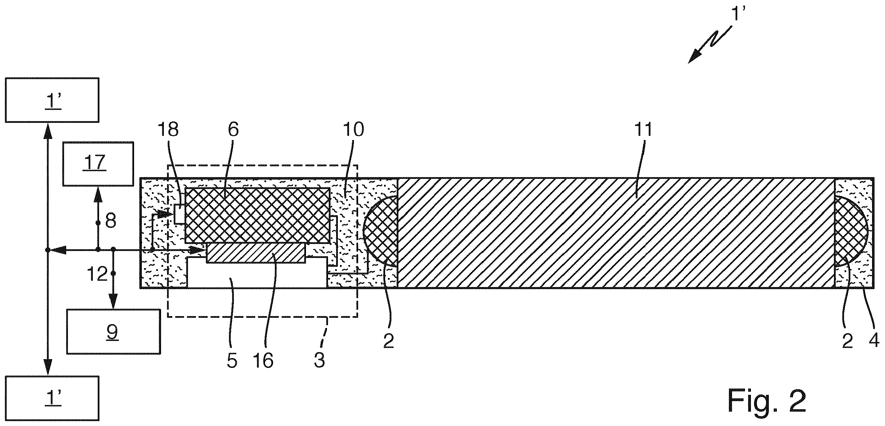

Fig. 2 zeigt eine Ausführungsform eines Einzelzahnmoduls 1' ohne Einrichtung 7 zur Erfassung der Rotorlage, bei der die Abschirmeinrichtung aus Vergussmasse 10 gebildet ist, die weichmagnetische Partikel enthält, wobei die Vergussmasse 10 die Statorwicklung 2 und die Steuereinrichtung 3 umgibt. Das Gehäuse 4 der Ausführungsform von Fig. 1 kann ebenfalls mit Vergussmasse verfüllt sein.

Beim Ausfall eines Einzelzahnmoduls 1, 1' kommt es zu einer Drehmomentreduktion. Durch den Aufbau aus möglichst vielen Einzelzahnmodulen 1, 1' reduziert sich der Verlust an Drehmoment. Die notwendige Überdimensionierung zum Ausgleich eines Einfachfehlers wird im Vergleich zu 3- oder 6-phasigen Systemen stark vermindert. Dadurch kann der Antrieb kleiner gebaut werden, dies spart Material, Bauraum und Gewicht.

Wenn eine Wicklung 2 durch Wicklungsschluss oder mechanische Einwirkungen von außen (z.B. Eindringen eines Fremdkörpers durch das Gehäuse) zerstört wird, hat dies keine weiteren Auswirkungen als die Zerstörung dieser einen Wicklung und dem anteiligen Drehmomentverlust.

Das Sicherungselement 18 verhindert einen Kurzschluss im DC-Zwischenkreis, sobald ein schwerwiegender Fehler zum Ausfall eines Einzelzahnmoduls 1, 1' führt. Daraus resultiert eine erhöhte Betriebssicherheit.

Aufgrund des erfindungsgemäßen Aufbaus reduziert sich der Montageaufwand und es sind weniger elektrische Verbindungen notwendig, so dass die Anzahl möglicher Fehlerquellen verringert wird.

Der elektrische Antrieb kann beispielsweise eine Synchron-, Synchronreluktanz- oder BLDC-Maschine sein.

Die Abschirmeinrichtung verhindert eine elektromagnetische Beeinflussung der Elektronik sowie die Beeinflussung des Umfeldes durch das Einzelzahnmodul.

Die Vergussmasse kann nicht in Brand geraten und verhindert dadurch auch das Abbrennen der vergossenen Komponenten. Somit können Defekte infolge mechanischer Einwirkungen, wie z.B. starken Erschütterungen oder Vibrationen, vermieden werden. Der Antrieb ist auch dann noch funktionsfähig, wenn Flüssigkeit in das Gehäuse eindringt.

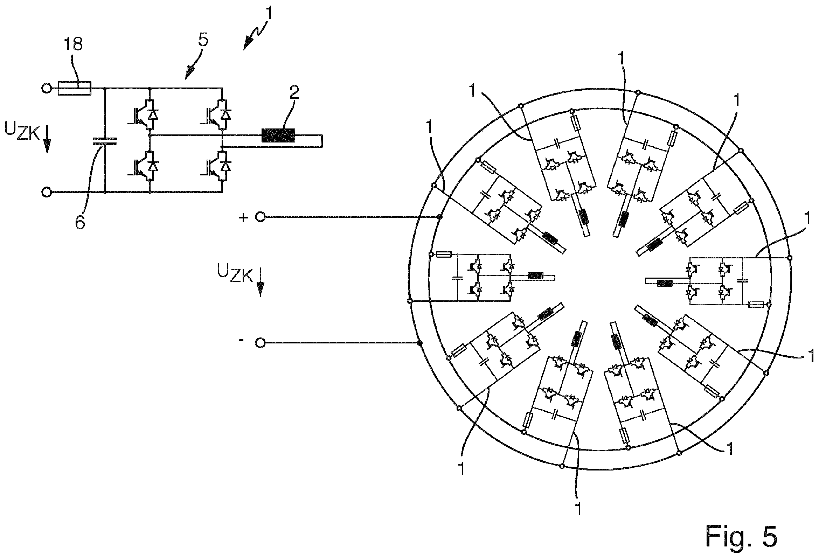

Fig. 5 zeigt hoch schematisch eine Mehrzahl von Einzelzahnmodulen 1, die parallel an einen Spannungszwischenkreis bzw. DC-Zwischenkreis angeschlossen sind. Die Einzelzahnmodule 1 sind gleichmäßig über einen Umfang des Stators verteilt. Es versteht sich, dass neben den gezeigten Komponenten 2, 18, 5 und 6 typisch noch weitere, nicht dargestellte Komponenten vorhanden sein können, beispielsweise Stromsensoren, Spannungssensoren, Temperatursensoren, (Last-) Widerstände, Spulen, Kondensatoren, usw.

## Patentansprüche

1. Elektrischer Antrieb, aufweisend:
- einen Rotor und
- einen Stator in Zahnspulentechnik, wobei der Stator eine Anzahl von Einzelzahnmodulen (1, 1') aufweist, wobei ein jeweiliges Einzelzahnmodul (1, 1') aufweist:
- eine Statorwicklung (2), die um einen zugehörigen Zahn (11) gewickelt ist, und
- eine Steuereinrichtung (3), die dazu ausgebildet ist, ein Ansteuersignal für die Statorwicklung (2) zu erzeugen,
**dadurch gekennzeichnet, dass**
- ein jeweiliges Einzelzahnmodul (1, 1') eine Abschirmeinrichtung (4, 10) aufweist, die die Statorwicklung (2) und die Steuereinrichtung (3) umgibt, wobei die Abschirmeinrichtung ein Gehäuse (4), insbesondere aus Stahlblech, aufweist, wobei das Gehäuse (4) die Statorwicklung (2) und die Steuereinrichtung (3) vollständig umgibt, wobei das Gehäuse (4) mit Vergussmasse verfüllt ist, die weichmagnetische Partikel enthält, wobei die Vergussmasse (10) die Statorwicklung (2) und die Steuereinrichtung (3) vollständig umgibt,
- wobei die Abschirmeinrichtung als hermetische Abriegelung derart ausgeführt ist, dass sie bei einem Wicklungsbrand der Statorwicklung (2) nicht zerstört wird.

2. Elektrischer Antrieb nach Anspruch 1, **dadurch gekennzeichnet, dass**
- eine jeweilige Steuereinrichtung (3) ein elektrisches Sicherungselement (18) aufweist.

3. Elektrischer Antrieb nach Anspruch 1 oder 2, **dadurch gekennzeichnet, dass**
- eine jeweilige Steuereinrichtung (3) ein Leistungshalbleitermodul (5) und/oder einen elektrischen Energiespeicher (6) aufweist.

4. Elektrischer Antrieb nach einem der vorhergehenden Ansprüche, **dadurch gekennzeichnet, dass**
- eine jeweilige Steuereinrichtung (3) eine Einrichtung (7) zur Erfassung der Rotorlage aufweist.

5. Elektrischer Antrieb nach einem der vorhergehenden Ansprüche, **dadurch gekennzeichnet, dass**
- eine jeweilige Steuereinrichtung (3) einen Energieversorgungsanschluss (8) aufweist.

6. Elektrischer Antrieb nach einem der vorhergehenden Ansprüche, **dadurch gekennzeichnet, dass**
- der elektrische Antrieb eine übergeordnete Steuerung (9) aufweist, die in Datenverbindung mit den Steuereinrichtungen (3) der jeweiligen Einzelzahnmodule (1, 1') steht.

7. Elektrischer Antrieb nach einem der vorhergehenden Ansprüche, **dadurch gekennzeichnet, dass**
- der Rotor an seinem Umfang mit Markierungen zur Kodierung der Rotorlage versehen ist.

8. Elektrischer Antrieb nach einem der vorhergehenden Ansprüche, **dadurch gekennzeichnet, dass**
- der Rotor als Permanentmagnetrotor oder Reluktanzrotor ausgeführt ist.

## Claims

1. An electric drive comprising:
- a rotor and
- a stator in toothed-coil technology, wherein the stator comprises a number of individual tooth modules (1, 1'), wherein a respective individual tooth module (1, 1') comprises:
- a stator winding (2) which is wound around an associated tooth (11), and
- a control device (3) which is designed to generate an control signal for the stator winding (2),
**characterized in that**
- a respective individual tooth module (1, 1') comprises a shielding device (4, 10) which surrounds the stator winding (2) and the control device (3), wherein the shielding device has a housing (4), in particular made of sheet steel, wherein the housing (4) completely surrounds the stator winding (2) and the control device (3), wherein the housing (4) is filled with potting compound containing soft magnetic particles, wherein the potting compound (10) completely surrounds the stator winding (2) and the control device (3),
- wherein the shielding device is embodied as a hermetic seal such that it is not destroyed in the event of a winding fire of the stator winding (2).

2. The electric drive as claimed in claim 1, **characterized in that**
- a respective control device (3) has an electric fuse element (18).

3. The electric drive as claimed in claim 1 or 2, **characterized in that**
- a respective control device (3) has a power semiconductor module (5) and/or an electric energy store (6).

4. The electric drive as claimed in one of the preceding claims, **characterized in that**
- a respective control device (3) has a device (7) for detecting the rotor position.

5. The electric drive as claimed in one of the preceding claims, **characterized in that**
- a respective control device (3) has an energy supply connection (8).

6. The electric drive as claimed in one of the preceding claims, **characterized in that**
- the electric drive has a superordinate controller (9) which has a data connection to the control devices (3) of the respective individual tooth modules (1, 1').

7. The electric drive as claimed in one of the preceding claims, **characterized in that**
- the rotor is provided with markings for coding the rotor position on its circumference.

8. The electric drive as claimed in one of the preceding claims, **characterized in that**
- the rotor is in the form of a permanent magnet rotor or a reluctance rotor.

## Revendications

1. Mécanisme d'entraînement électrique, comprenant :
- un rotor et
- un stator en technologie à double bobine, le stator possédant un certain nombre de modules à dent unique (1, 1'), chaque module à dent unique (1, 1') respectif possédant :
- un enroulement de stator (2), qui est enroulé autour d'une dent (11) associée, et
- un dispositif de commande (3), qui est configuré pour générer un signal de commande pour l'enroulement de stator (2),
**caractérisé en ce que**
- un module à dent unique (1, 1') respectif possède un dispositif de blindage (4, 10), qui entoure l'enroulement de stator (2) et le dispositif de commande (3), le dispositif de blindage possédant un boîtier (4) notamment en tôle d'acier, le boîtier (4) entourant entièrement l'enroulement de stator (2) et le dispositif de commande (3), le boîtier (4) étant rempli d'une masse de scellement qui contient des particules en matériau magnétique doux, la masse de scellement (10) entourant entièrement l'enroulement de stator (2) et le dispositif de commande (3),
- le dispositif de blindage étant réalisé sous la forme d'un endiguement hermétique de telle sorte qu'il n'est pas détruit lors d'un feu d'enroulement de l'enroulement de stator (2).

2. Mécanisme d'entraînement électrique selon la revendication 1, **caractérisé en ce que**
- un dispositif de commande (3) respectif possède un élément de sécurité électrique (18).

3. Mécanisme d'entraînement électrique selon la revendication 1 ou 2, **caractérisé en ce que**
- un dispositif de commande (3) respectif possède un module semiconducteur de puissance (5) et/ou un accumulateur d'énergie électrique (6).

4. Mécanisme d'entraînement électrique selon l'une des revendications précédentes, **caractérisé en ce que**
- un dispositif de commande (3) respectif possède un dispositif (7) destiné à détecter la position du rotor.

5. Mécanisme d'entraînement électrique selon l'une des revendications précédentes, **caractérisé en ce que**
- un dispositif de commande (3) respectif possède une borne d'alimentation en énergie (8).

6. Mécanisme d'entraînement électrique selon l'une des revendications précédentes, **caractérisé en ce que**
- le mécanisme d'entraînement électrique possède une commande de niveau supérieur (9), qui se trouve en liaison de données avec les dispositifs de commande (3) des modules à dent unique (1, 1') respectifs.

7. Mécanisme d'entraînement électrique selon l'une des revendications précédentes, **caractérisé en ce que**
- le rotor est pourvu sur son pourtour de repères servant à coder la position du rotor.

8. Mécanisme d'entraînement électrique selon l'une des revendications précédentes, **caractérisé en ce que**
- le rotor est réalisé sous la forme d'un rotor à aimant permanent ou d'un rotor à réluctance.
